# DEMANDE DE BREVET EUROPEEN

(11) **EP 0 950 790 A1**
(43) Date de publication de la demande: **20.10.1999**
(21) Numéro de dépôt: 99830081.8
(22) Date de dépôt: 17.02.1999
(51) Int. Cl.: E05F 15/16, E05F 15/00, H02H 7/085

(54) **Interface pour lève-vitre électrique de voitures avec contrôle logique de sécurité**

(30) Priorité: 17.04.1998 IT PZ980003
(71) Demandeur: Rosa, Luciano, 85100 Potenza (IT); Romaniello, Salvatore, 85100 Potenza (IT)
(72) Inventeur: Rosa, Luciano, 85100 Potenza (IT); Romaniello, Salvatore, 85100 Potenza (IT)

(57) **Abrégé**

Le système est un automatisme qui contrôle les lève-vitres électriques en assurant l'utilité pratique et la sécurité.

La présence d'un object qui empêche la fermeture du vitre (selon la modalité automatique ou à caractère manuel) arrêt le mouvement du vitre et l'ouvre un peu. Une suivante commande de fermeture, est considérée erronée, donc, le vitre s'ouvre de quelques centimètres et ensuite il est bloqué en fermeture. Pour actionner le vitre de nouveau, il faut donner la commande d'ouverture.

Cet automatisme sauvegarde les moteurs électriques des lève-vitres. En effect, quand les vitres sont dèjà ouverts ou fermés, ils ne peuvent pas être actionnés encore plus pour l'ouverture ou la fermeture.

## Description

Cette invention fait partie du secteur Technologique de l'industrie des voitures et s'adresse au marché des accessoires pour la sécurité ou les grandes performances.

Il s'agit d' une interface entre l'usager et le lève-vitres, qui se place sur l'installation existante, en assurant l'utilité pratique et la sécurité.

### CONDITION DE LA TECHNIQUE PRÉEXISTANTE

De nos jours les plus complexes systèmes, permettent d'actionner automatiquement les vitres électriques, grâce à la mesure du courant absorbé par le moteur électrique quand le vitres est actionné. En outre ces systèmes ont un contact électrique dans les portières. Quand le vitre rencontre un empêchement pendant la fermeture, ces systèmes invertissent le sens du mouvement en ouvrant le vitre de quelques centimètres et par la suite en le bloquant (protection de l'écrasement) même si le bouton reste pressé. Quand il n'y a pas d'empêchement, pour fermer le vitre il faut informer le système au moyen d'un contact électrique qu'on appelle FIN DE COURSE. Les systemes dans le commerce permettent le fonctionnement des vitres en pressant le bouton approprié. Avec une brève pression on obtient un bref mouvement du vitre, en prolongeant la pression, le mouvement devient automatique: même si le bouton est laissé, le vitre reste en mouvement jusqu'à ce qu'il rejoint le bord inférieur ou supérieur, avec FIN DE COURSE, ou jusqu'à une nouvelle pression.

Mais ces systèmes présentent des limites dans l'utilité pratique, parce que seulement les voitures de nouvelle construction ont des FIN DE COURSE dans les portières, qui doivent être prévues pendant leur project.

C'est pourquoi ces systèmes souvent ne sont pas installés sur le voitures les plus répandues. Il y a des autres modèles qui n'ont pas besoin de FIN DE COURSE mais qui ont le mouvement automatique; toutefois ils manquent de sécurité parce qu'ils ne sont pas à même de reconnaître un éventuel empêchement et ils sont dangereux parce qu'ils arrêtent le mouvement en retard sans retourner en arrière.

### EXPOSITION DE L'INVENTION

Cette interface s'installe sur les voitures qui ont les lève-vitres électriques. Il n'y a pas besoin de FIN DE COURSE ou de détecteurs d'outre sorte, placés dans le châssis de la portière et l'interface contrôle attentivement la sécurité des usagers soit par des conditions logiques, soit par la mesurage de la force employée par le moteur (c'est à dire la mesure du courant que le vitre en mouvement absorbe). Ce système considère la suite des commandes que l'usager donne avec le bouton, dans son ensemble et non pas un par un.

### PRINCIPE DE FONCTIONNEMENT

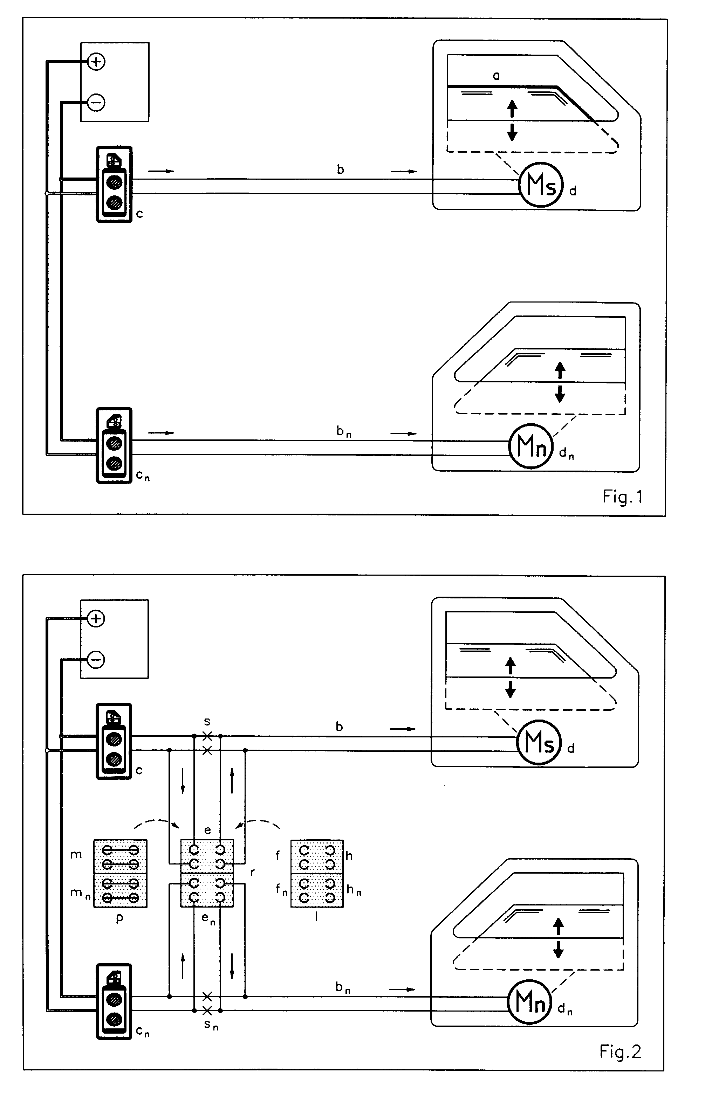

Maintenant, pour expliquer plus clairement cette choix, on va décrire quelques situations possibles et la manière où l'interface les affronte:
- On appelle coupe de vitre le bord du vitre qui n'est pas refermé entre les rebords, et qui par suite de la fermeture se dirige en haute, Fig.1(a);
- On appelle dangereuses les opérations de fermeture des vitres parce qu'elles pourraient provoquer l' écrasement des corps que le coup de vitre peut rencontrer;
- On appelle interruption automatique l'arrêt que l'interface commande de façon autonome quand la force produite par le moteur, pendant le mouvement du vitre, est excessive. Cette force augmente en présence d'un obstacle qui empêche le mouvement du vitre ou quand le vitre gagne le rebord;
- On appelle arrêt logique, la condition que l'interface admet après l'interruption automatique: le vitre déjà ouvert ou fermé, ne peut pas être ultérieurement ouvert ou fermé; en fase de fermeture, les actions dangereuses sont limitées parce que l'arrêt automatique fait ouvrir le vitre de 2-3 millimètres avant d'en bloquer le mouvement. Cet arrêt logique est annulé par une action dans le sens contraire.

L'interface contrôle en même temps un ou plus vitres, au moyen d'une horologe placée à l'interieur du système: après l'arrêt automatique, il faut 7 (sept) secondes pour observer les opérations suivantes. Cela signifie que, si entre-temps un autre vitre est actionné, l'horologe recommence à compter depuis le débout. Si pendant les 7 secondes rien est arrivé, le vitre se lève de 2-3mm, pour rattraper l'ouverture précédente, donc il y a un arrêt logique de fermeture. Pendant les 7 secondes suivantes, seulement les actions d'overture sont permises; au contraire, les actions de fermeture sont considerées dangereuses, donc elles sont empêchées par l'arrêt en fermeture, et font ouvrir le vitre de 2 cm.

### COMMUTATEUR DE DEMARRAGE À CLE ALLUMÉ

Quand le commutateur de demarrage à clé est allumé, l'interface peut protéger contre les accidents dûs au mouvement des vitres, grâce à l'interaction d'une personne qui a le sens de responsabilités. Si le commutateur s'éteind, toutes les opérations en cours sont interrompues et les suivantes commandes sur les boutons sont ignorées. Quand le commutateur est allumé, l'interface contrôle les commandes électriques selon deux modalités: avec un mouvement manuel ou avec un muovement automatique. Avec un mouvement manuel: l'ouverture ou la fermeture (brève ou longue) du vitre sont proportionnelles à la durée de la pression sur le bouton qui en règle le mouvement. Puisque le mouvement du vitre s'interrompt quand le bouton n'est plus pressé, il est possible d'obtenir avec précision soit la fermeture, soit l'ouverture. Avec un movement automatique: le mouvement (start-stop) est obtenu avec la succession rapide de deux commandes (par example le double click de la souris du personal computer). L'action continue jusqu'à l'achèvement de l'ouverture ou de la fermeture du vitre, ou jusqu'à une nouvelle pression sur le bouton. Il est toujours possible de passer du mouvement manuel au mouvement automatique et vice versa, à condition que le vitre ne soit pas déjà en mouvement.

Dans les deux cas, ce système peut corriger les commandes pour assurer la sécurité. Maintenant on va décrire ce qui passe quand il y a quelque chose qui empêche la fermeture d'un vitre. Exemple 1. Le chauffeur ne s'aperçoit pas que la main d'un passager se penche au dehors et il ferme le vitre. Le passager s'aperçoit du danger quand il sent une douleur à sa main et par instinct la retire, grâce à une brève ouverture du vitre de 2-3mm. Si la main n'a pas la place suffisante pour se délivrer, elle reste emprisonnée mais ne subit pas de traumatismes. À ce point, si (pendant les 7 secondes) le bouton est pressé pour l'ouverture, le vitre obéit à la commande qui est reconnue comme correcte; si au contraire le bouton est pressé pour la fermeture du vitre, la commande est ignorée parce que le système la considère erronée. C'est pourquoi le mouvement suivant sera uniquement une ouverture du vitre de 2 cm, suivi par l'arrêt logique en fermeture.

Même quand le chauffeur ouvre, par erreur, un vitre au lieu d'un autre, il a toujours 7 secondes pour corriger la commande.

Exemple 2. Le chauffeur ne s'aperçoit de la présence d'un object qui empêche la fermeture d'un vitre. Après le contact avec l'object le vitre s'ouvre de 2-3mm, mais l'object qui n'a pas été vu, reste interposé. Après 7 secondes, l'interface fait lever automatiquement le vitre de 2-3mm, pour rattraper l'ouverture précédente, en provoquant l'arrêt logique en fermeture. À ce point l'object est emprisonné et toutes les autres commandes de fermeture sont ignorées, pour limiter les dommages évetuels aux objects.

Exemple 3. Il y a des cas où la fermeture d'un vitre ne va pas à bonne fin. Les dépôts de glace et de sable, ou les petites déformations du châssis, font arrêter automatiquement le vitre qui après 7 secondes est bloqué en fermeture. Si le chauffeur presse le bouton pour ouvrir le vitre, l'arrêt logique est annulé donc le chauffeur peut encore essayer de fermer le vitre. S'il y a encore un empêchement, le vitre reste ouvert mais de toute façon le chauffeur, en excluant tous les contrôles de sécurité, peut fermer le vitre. Par la suite, il s'adressera au mécanicien de confiance pour résoudre le problème.

### COMMUTATEUR DE DEMARRAGE À CLÉ ÉTEINT

Quand le commutateur de demarrage à clé est éteint et la voiture est fermée par le blocage des portières avec clé ou télécommande, le système actionne la fermeture automatique des vitres électriques, pour éviter de les oublier ouverts quand on quitte la voiture.

Cette opération peut être dangereuse pour les personnes qui se trouvent près de la voiture parce qu'il n'y a pas de chauffeur, donc il n'y a personne qui surveille les opérations automatiques.

C'est pourquoi le système doit se conduire de façon différente par rapport aux cas où le commutateur de demarrage à clé est allumé. En effect il doit toujours supposer que les vitres rencontrent un empêchement et, par conséquent, commander deux fermetures consécutives: la première interesse tous les vitres que le système contrôle électriquement en sécurité, avec retour de 2-3mm; après la fermeture, les vitres s'ouvrent de 2 cm, comme s'ils avaient rencontré un empêchement. Après la seconde fermeture, le système fait ouvrir le vitre de 2-3mm et les respectives horologes commencent à compter 7 secondes. Ensuite les vitres, en rattrapant les 2-3mm de l'ouverture précédente, se ferment completement (une normale fermeture dure peu moins de cette opération). Maintenant on va décrire ce qui passe en présence d'un empêchement sur le coup de vitre. Le chauffeur éteint le tableau, attent que les passagers descendent de la voiture et ferme les portières. Entre-temps, un des passagers s'aperçoit qu'il a oublié quelque chose dans la voiture, donc il se penche par le vitre dans le but de la rattraper. Par suite de la fermeture de la voiture, les vitres se ferment en bloquant le bras du passager. Le système alors, ouvre de 2 cm les vitres qui permettent de gagner la place suffisante pour délivrer le bras. À ce point le système actionne la seconde fermeture et le vitre du passager, qui avait rencontré l'empêchement, sera le dernier à se fermer.

Il y a deux modalité, dont se sert ce système, pour la fermeture des vitres: fermeture totale e fermeture partielle. La fermeture totale, dont nous avons parlé, entraîne le serrage des vitres, par conséquent elle permet d'isoler l'habitacle du milieu extérieur en cas de pluie et en faisant fonction d'antivol avec contrôle volumétrique. La fermeture partielle entraîne une ouverture des vitres de 1cm environ du rebord supérieur, après la fermeture totale. Cela représente une solution utile surtout quand la voiture est parquée longtemps au soleil, parce qu'elle permet à l'air d'entrer dans l'habitacle. Pour choisir une des deux modalités, il faut annuler le blocage des portières pour l'actionner de nouveau. Ainsi les deux modalités de fermeture peuvent se relayer. Les fermetures de nombre impair (première, troisième, etc.) sont de fermeture totale, celles-là de nombre pair (seconde, quatrième, etc.) sont de fermeture partielle. Cet ordre peut être interveti, mais ce n'est pas l'object de ce brevet.

### INTERVENTIONS D' URGENCE

L'interface se place sur l'équipement électrique au moyen d'un connecteur qui rassemble 6 (six) accès, 4 (quatre) sorties et l'alimentation électrique de 12 volt. En cas d'urgence ou de dérangement, l'interface peut être exclue soit par une logique intérieure au moyen d'un interrupteur, soit physiquement au moyen d'un connecteur électrique.

Dans la première hypothèse, les fonctions du système sont réduites parce que tous les contrôles de sécurité sont exclus en offrant une solution momentanée aux problèmes transitoires de fonctionnement. En cas de dérangement permanent, tout le système est exclu en insérant deux contacts électriques par vitre, Fig.2 (m - mₙ ), qui sont contenus dans un connecteur spécial de rétablissement, Fig.2 (p), et qui déplacent les accès directement dans les sorties. Le circuit électrique de cette installation devient comme celui-là représenté en Fig.l, c'est à dire qu'il marche de nouveau comme quand il n'y avait pas ce système.

### EFFECTS AVANTAGEUX DU SYSTÈME

Les avantages que ce système entraîne, sont de nature économique parce qu'il n'y a pas besoin de fin de course, donc il n'y a pas de coûts additionnels pour l'essai après le montage. De nos jours, l'essai est nécessaire pour vérifier le fonctionnement des détecteurs directement sur la portière de la voiture, dont ils sont partie intégrante, même si chaque composant du système est en ordre avant de l'installer.

L'interface présentée ici, est un unique composant qui s'installe sur la voiture achevée, dans laquelle un microcontrôleur exerce toutes les fonctions, en incluant les contrôles sur la contemporanéité des commandes d'ouverture et de fermeture, et qui pourrait gérer même le système d'antivol à contrôle volumétrique.

Ces avantages sont très pratiques pour les usagers, parce que l'interface permet soit les actionnements automatiques demandés, soit les opérations de fermeture et d'ouverture à caractère manuel, de sorte que son usage soit facile même au cas où l'usager veut utiliser les lève-vitres à la manière traditionnelle.

### BRÈVE DESCRIPTION DES DESSINS

Fig. 1 - schéma électrique d'une installation pour lève-vitre
a- coupe de vitre
b- bₙ - installation électrique préexistante
c- cₙ- bouton de commande du vitre gauche - vitre énième
d- dₙ- moteur du vitre gauche - vitre énième

Fig. 2 - schéma d'installation de l'interface
b- c- cₙ- d- dₙ- on renvoie à Fig. 1
e- eₙ - prolongement des points de sectionnement
f- fₙ - accès de l'interface
h- hₙ - sorties de l'interface
l- interface pour lève-vitre électrique - object du brevet
m- mₙ - circuits électriques de fermeture du connecteur de rétablissement
p- connecteur de rétablissement qui remplace l'interface
r- point d'insertion de l'interface
s- sₙ - point de sectionnement de l'installation préexistante

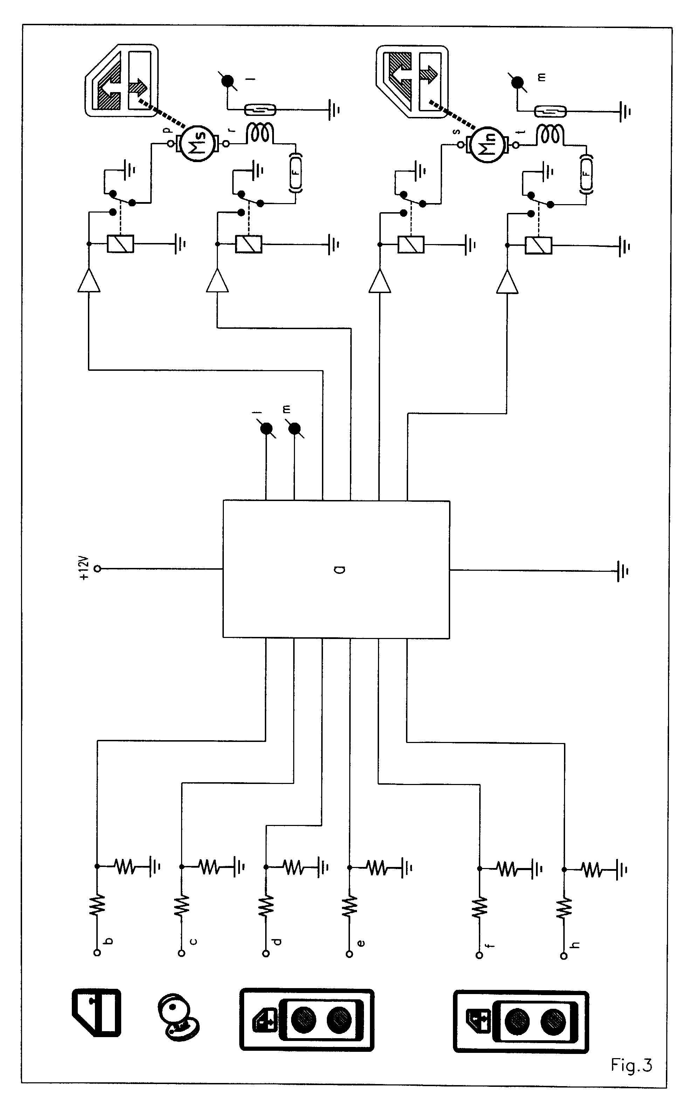

Fig. 3 - schéma électrique du principe de l'interface
a- micro-contrôleur avec logique de sécurité
b- signal pour le blocage des portières
c- signal du commutateur à clé
d- e- signaux du bouton de commande gauche
f- h- signaux du bouton de commande énième
l- signal du détecteur de courant pour le vitre gauche
m- signal du détecteur de courant pour le vitre énième
p- r- sortie de commande du moteur pour le vitre gauche
s- t- sortie de commande du moteur pour le vitre énième

## Revendications

1. Dispositif d'interface entre l'usager et les lève-vitres électriques qui, au moyen d'un micro-contrôleur, protège contre les accidents dûs aux actionnements des vitres, en se basant sur la suite des commandes qui l'usager donne avec les boutons pendant et après les actionnements. Dispositif qui considère chaque commande par rapport aux autres éventuelles données en un intervalle de 7 (sept) secondes (ou un autre intervalle spécifié); entre-temps seulement les actionnements considérés pas dangereux pour l'usager sont permis, alor que ceux-là anomaux ou contradictoires sont annulés (contrôle logique). Dispositif qui se sert d'informations additionnelles remarquées à l'intérieur, comme le commutateur à clé allumé, l'excès du courant absorbé par le moteur électrique d'actionnement et le sens du mouvement du vitre.

2. Dispositif selon la revendication 1 qui arrêt le vitre et ignore les commandes suivantes d'ouverture quand, en remarquant un excès du courant, le vitre s'est ouvert totalement ou quand il y a quelque chose qui empêche l'ouverture.

3. Dispositif selon la revendication 1 qui en fase de fermeture arrêt le vitre et le fait ouvrir de 2-3mm environ (ou d'une autre quantité à préciser) quand on remarque un excès du courant; ensuite il actionne l'horologe intérieure qui compte 7 (sept) secondes (ou un autre intervalle spécifié).

4. Dispositif selon les revendications 1 et 3 qui, après les 7 secondes (ou un autre intervalle spécifié), lève le vitre intéressé de 2-3mm pour rattraper l'ouverture précedente en le bloquant en fermeture.

5. Dispositif selon les revendications 1 et 3 qui quand le commutateur de demarrage à clé est allumé, ouvre le vitre de 2 cm environ, si pendant les 7 secondes il y a une commande d'ouverture de 2 cm ou plus (jusqu'à ce que le bouton est pressé).

6. Dispositif selon les revendications 1 et 3 qui, avec le commutateur de demarrage à clé allumé, en considérant dangereuse la commande de fermeture donnée pendant les 7 secondes, ouvre le vitre de 2 cm (ou d'une autre quantité à préciser), ignore les commandes suiventes de fermeture et annule les accidentelles.

7. Dispositif selon la revendication 1, qui quand le commutateur de demarrage à clé est éteint, ferme les vitres électriques (revendication 3) au moyen d'un signal électrique dû à l'actionnement de la fermeture centralisée; ensuite les ouvre de 2 cm environ, en moins de temps en comparison de la revendication 3 et les ferme de nouveau selon les revendications 3 et 4.

8. Dispositif selon la revendication 1, qui quand le commutateur de demarrage à clé est éteint, se sert du signal d'actionnement de la fermeture centralisée pour la fermeture soit totale soit partielle des vitres électriques en faisant alterner l'une et l'autre, chaque fois que la voiture est fermée. La fermeture totale entraîne le serrage des vitres, la partielle entraîne une ouverture des vitres de 1 cm du rebord supérieur, après la fermeture totale.

9. Dispositif selon la revendication 1 qui, avec le commutateur de demarrage à clé allumé, permet l'ouverture ou la fermeture à caractère manuel, c'est à dire que le vitre reste en mouvement jusqu'à ce que le bouton est pressé. Dispositif qui, avec la succession rapide de deux commandes en même sens sur le bouton, permet le mouvement automatique du vitre jusqu'à l'achèvement de la fermeture ou de l'ouverture.
